# EUROPÄISCHE PATENTANMELDUNG

(11) **EP 3 524 416 A1**
(43) Veröffentlichungstag der Anmeldung: **14.08.2019**
(21) Anmeldenummer: 19150630.2
(22) Anmeldetag: 08.01.2019
(51) Int. Cl.: B29C 73/16, B29C 73/22, B29D 30/06, B60C 19/12, B60C 25/00, C09K 3/12

(54) **VERFAHREN ZUR DETEKTION UND ZUM ABDICHTEN EINER EINSTICHSTELLE IN EINEM TECHNISCHEN GUMMIARTIKEL, INSBESONDERE IN EINEM FAHRZEUGLUFTREIFEN, SICHERHEITSSYSTEM ZUR DURCHFÜHRUNG DES VERFAHRENS UND FAHRZEUGLUFTREIFEN UMFASSEND DAS SICHERHEITSSYSTEM**

(30) Priorität: 08.02.2018 DE 102018201952
(71) Anmelder: Continental Reifen Deutschland GmbH, 30165 Hannover (DE)
(72) Erfinder: Guardalabene, Joe, 30659 Hannover (DE); Tim Kee, Sherry-Ann, 30167 Hannover (DE); Doroshenko, Mikheil, 30823 Garbsen (DE); Cai, Xiaoke, 30165 Hannover (DE)
(74) Vertreter: Finger, Karsten

(57) **Zusammenfassung**

Die Erfindung betrifft ein Verfahren zur Detektion und zum Abdichten einer Einstichstelle in einem technischen Gummiartikel, insbesondere in einem Fahrzeugluftreifen, ein Sicherheitssystem zur Durchführung des Verfahrens und einen Fahrzeugluftreifen umfassend das Sicherheitssystem.

Bei dem Verfahren weist der technische Gummiartikel wenigstens ein Dichtmittel auf, welches magnetisierbare Partikel enthält, und das Verfahren umfasst wenigstens folgende Verfahrensschritte:
a) Fließen zumindest eines Teils des Dichtmittels zu der und in die Einstichstelle
b) Erzeugung eines Magnetfeldes und Detektion des Dichtmittels in der Einstichstelle mittels eines Magneten und
c) Magnetisierung der Partikel durch das Magnetfeld des Magneten, sodass das Dichtmittel zumindest in der Einstichstelle durch die magnetischen Anziehungskräfte der Partikel eine erhöhte Viskosität aufweist und somit geeignet ist, ein Ausfließen des Dichtmittels aus der Einstichstelle zu vermeiden.

## Beschreibung

Die Erfindung betrifft ein Verfahren zur Detektion und zum Abdichten einer Einstichstelle in einem technischen Gummiartikel, insbesondere in einem Fahrzeugluftreifen, ein Sicherheitssystem zur Durchführung des Verfahrens und einen Fahrzeugluftreifen umfassend das Sicherheitssystem.

Dichtmittel zum Abdichten einer Einstichstelle von Fahrzeugreifen im Pannenfall sind im Stand der Technik bekannt. Selbstdichtend ausgestaltete Fahrzeugluftreifen sind beispielsweise aus der DE 10 2006 059 286 A1 der Anmelderin bekannt. Hierbei werden Reifen-Standard-Konstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.
Das Dichtmittel zeichnet sich durch Luftdichtigkeit, starke Klebrigkeit und ein ausgewogenes Fließverhalten aus.

Allerdings besteht dabei die Herausforderung, dass das Dichtmittel aus dem Reifen herausfließen kann, wie insbesondere nach dem (zufälligen) Entfernen des Einstichobjektes. Weiterhin ist die Einstichstelle nach dem Entfernen des Objektes meist von außen nicht sichtbar.

Der vorliegenden Erfindung liegt daher die Aufgabe zugrunde ein Verfahren und ein zugehöriges Sicherheitssystem bereitzustellen, bei welchem die vorstehend genannten Probleme gelöst sind.

Gelöst wird die Aufgabe durch ein Verfahren zur Detektion und zum Abdichten einer Einstichstelle in einem technischen Gummiartikel, insbesondere in einem Fahrzeugluftreifen, wobei der technische Gummiartikel wenigstens ein Dichtmittel aufweist, welches magnetisierbare Partikel enthält, und wobei das Verfahren wenigstens folgende Verfahrensschritte umfasst:
a) Fließen zumindest eines Teils des Dichtmittels zu der und in die Einstichstelle
b) Erzeugung eines Magnetfeldes und Detektion des Dichtmittels in der Einstichstelle mittels wenigstens eines Magneten und
c) Magnetisierung der Partikel durch das Magnetfeld des wenigstens einen Magneten, sodass das Dichtmittel zumindest in der Einstichstelle durch die magnetischen Anziehungskräfte der Partikel eine erhöhte Viskosität aufweist und somit geeignet ist, ein Ausfließen des Dichtmittels aus der Einstichstelle zu vermeiden.

Ein weiterer Gegenstand der Erfindung ist ein Sicherheitssystem zur Durchführung des erfindungsgemäßen Verfahrens, umfassend wenigstens ein Dichtmittel, welches magnetisierbare Partikel enthält.
Gemäß einer bevorzugten Ausführungsform umfasst das Sicherheitssystem zudem wenigstens einen Magneten, der räumlich von dem Dichtmittel getrennt ist.

Ein weiterer Gegenstand der Erfindung ist ein Fahrzeugluftreifen umfassend das erfindungsgemäße Sicherheitssystem.

Der Vorteil der Erfindung liegt darin, dass sich das Dichtmittel enthaltend die magnetisierbaren Partikel durch die Änderung des Magnetfeldes wie eine magnetorheologische Flüssigkeit verhält. Im Pannenfall - dies ist der Zustand, in dem die Partikel noch magnetisierbar sind - fließt das Dichtmittel aufgrund der noch geringeren Viskosität zu der und in die Einstichstelle (Schritt a). Hierzu weist es eine geeignete Viskosität und ein geeignetes Fließverhalten auf.
Dadurch, dass das Dichtmittel magnetisierbare Partikel enthält, kann es in der Einstichstelle, insbesondere nach dem Entfernen des Objektes, durch wenigstens einen Magneten detektiert werden (Schritt b). Hierzu wird, nachdem das Dichtmittel in die Einstichstelle geflossen ist, ein Magnetfeld erzeugt.
Bevorzugt und beispielsweise erfolgt dies durch wenigstens einen räumlich vom technischen Gummiartikel und dem Dichtmittel getrennt angeordneten Magneten, der dann aktiviert wird. Die Aktivierung des Magneten wird beispielsweise im Falle eines Fahrzeugluftreifens dann ausgelöst, wenn ein Drucksensor einen Druckabfall detektiert, der durch ein Einstichobjekt hervorgerufen wird.
Durch das erzeugte Magnetfeld werden die Partikel des Dichtmittels zumindest in der Einstichstelle magnetisiert (Schritt c). Hierbei richten sich die dann magnetisierten Partikel in Kettenartigen Strukturen aus. Hierdurch ändern sich die Eigenschaften der magnetisierten Partikel und damit des Dichtmittels, wobei insbesondere dessen Viskosität zumindest lokal an und in der Einstichstelle erhöht wird und das Fließverhalten hierdurch verändert wird. Das Dichtmittel fungiert somit als magnetorheologische Flüssigkeit. Insbesondere durch die erhöhte Viskosität kann ein Ausfließen des Dichtmittels aus der Einstichstelle vermieden werden. Dabei ist es besonders vorteilhaft, wenn der oder die Magneten so angeordnet sind, dass die Ausrichtung der Partikel in Ketten senkrecht zur Fließrichtung der Einstichstelle erfolgt. Der Artikel kann hiernach für eine längere Zeit weiter verwendet werden, ohne dass es sofort zu einer Leckage kommt. Das Magnetfeld des Magneten wird bevorzugt und beispielsweise dann solange aufrechterhalten, bis die Einstichstelle dauerhaft repariert wird bzw. der Artikel ggf. ausgetauscht wird.

Sämtliche Ausführungen zu den erfindungsgemäßen Vorteilen und alle weiteren Ausführungen gelten für alle erfindungsgemäßen Gegenstände, wie das Verfahren, das Sicherheitssystem und den Fahrzeugluftreifen, sofern nichts anderes angegeben ist oder sich inhaltlich nichts anderes ergibt.

Bei dem wenigstens einen Magneten kann es sich um jeden geeigneten Magneten handeln, durch den eine Magnetisierung der Partikel erfolgen kann.

Der Magnet wird bei dem Verfahren gemäß einer vorteilhaften Ausführungsform der Erfindung wie oben beschrieben aktiviert. Gemäß dieser Ausführungsform der Erfindung handelt es sich dann nicht um einen Permanentmagneten, sondern insbesondere um einen Elektromagneten, der mittels eines Stromflusses aktiviert wird.

Bei Durchführung des erfindungsgemäßen Verfahrens, insbesondere der Schritte b) und c), an einem erfindungsgemäßen Fahrzeugluftreifen ist der Magnet oder sind die Magneten bevorzugt derart angeordnet, dass sich senkrecht zur Fließrichtung der Einstichstelle ein Magnetfeld ausbildet, sodass die Ausrichtung der dann magnetisierten Partikel in kettenartigen Strukturen senkrecht zur Fließrichtung des Dichtmittels aus der Einstichstelle erfolgt. Hierdurch wird ein Ausfließen des Dichtmittels aus der Einstichstelle besonders gut vermieden. Dabei kann der Magnet beispielsweise an der Felge oder an der Karosserie des Fahrzeuges wie beispielsweise am Kotflügel angebracht werden.
Ferner ist es denkbar, dass der wenigstens eine Magnet innerhalb des technischen Gummiartikels räumlich getrennt von dem Dichtmittel angeordnet ist.
Gemäß einer vorteilhaften Ausführungsform stellt der Magnet hierbei einen Bestandteil des technischen Gummiartikels dar.
Beispielsweise und bevorzugt kann es sich hierbei um die Kerndrähte eines oder beider Wulstbereiche von Fahrzeugluftreifen handeln. Durch diese wird dann beispielsweise ein Stromfluss geleitet, wodurch ein Magnetfeld induziert wird. Bevorzugt handelt es sich hierbei um einen Niederquerschnittsreifen, also einen Reifen mit einer im Vergleich zur Breite des Laufstreifens niedrigen Seitenwand, insbesondere mit einem Querschnittsverhältnis von weniger als 50 %, sodass das Magnetfeld in etwa auf der räumlichen Höhe des Laufstreifenbereiches und damit einer möglichen Einstichstelle erzeugt werden kann.

Gemäß einer weiteren Ausführungsform der Erfindung wird wenigstens ein Magnet von außen an die Einstichstelle herangeführt, sodass sich senkrecht zur Fließrichtung der Einstichstelle ein Magnetfeld ausbildet, sodass die Ausrichtung der dann magnetisierten Partikel in kettenartigen Strukturen senkrecht zur Fließrichtung des Dichtmittels aus der Einstichstelle erfolgt.
Hierbei kann es sich um einen Permanentmagneten handeln, der vorher räumlich ausreichend vom Dichtmittel getrennt ist, sodass die Partikel nicht vorab aktiviert werden. Dies würde zu einer unerwünschten Viskositätserhöhung führen, bevor das Dichtmittel zu der und in die Einstichstelle fließen kann. Das Heranführen des Permanentmagneten wird beispielsweise ebenfalls durch einen detektierten Druckverlust ausgelöst.
Es kann sich gemäß dieser Ausführungsform aber auch z. B. um einen Elektromagneten handeln, der dann noch aktiviert wird.

Unter "technischen Gummiartikeln" werden im Rahmen der vorliegenden Erfindung insbesondere solche Gummiartikel verstanden, bei denen eine Undichtigkeit durch eine Einstichstelle auftreten kann, welche insbesondere die gebrauchsgemäße Verwendung des Artikels erschwert oder unmöglich macht. Darunter fallen insbesondere Fahrzeugluftreifen, aber auch beispielsweise Schläuche oder Bälge.

Unter "Viskosität" wird im Rahmen der vorliegenden Erfindung die dynamische Scherviskosität bei 100 °C betrachtet, sofern nichts anderes angegeben ist. Die Messung der dynamischen Scherviskosität bei 100 °C erfolgt mittels eines Rheometers (HAAKE RheoStress 6000 der Firma Thermo Scientific, "Measuring plate cover" MPC20) mit einer Frequenz von 0,02 Hz.

Das Dichtmittel weist vor der Aktivierung durch das Magnetfeld bevorzugt eine dynamische Scherviskosität bei 100 °C von 300 bis 40000 Pa*s, besonders bevorzugt 300 bis 20000 Pa*s, ganz besonders bevorzugt von 300 bis 8000 Pa*s, wiederum besonders bevorzugt 300 bis 4000 Pa*s und wiederum ganz besonders bevorzugt von 1000 bis 3000 Pa*s auf.

Hiermit weist das Dichtmittel im Pannenfall eine optimale Fließfähigkeit auf, um zu der und in die Einstichstelle zu gelangen.
Durch die Aktivierung der magnetisierbaren Partikel zu magnetisierten Partikeln richten sich diese, zu übergeordneten Strukturen, insbesondere Ketten, aus, wodurch sich zumindest lokal makroskopisch die Viskosität des Dichtmittels erhöht. Beispielsweise beträgt die Viskosität dann lokal in der Einstichstelle das 2 bis 3-fache der anfänglichen (Fließ-)Viskosität.

Wie bereits ausgeführt enthält das Dichtmittel magnetisierbare Partikel. Hierbei können die Partikel prinzipiell sämtliche Formen aufweisen und jegliche denkbaren magnetisierbaren Materialien umfassen.

Die magnetisierbaren Partikel können beispielsweise sphärisch oder nahezu sphärisch oder länglich wie insbesondere ellipsoid oder stäbchenförmig (*engl.* "rod-shaped") geformt sein, wobei auch ein Gemisch verschiedener Formen denkbar ist.

Gemäß einer vorteilhaften Ausführungsform der Erfindung sind die Partikel länglich, insbesondere ellipsoid oder stäbchenförmig. Diese lassen sich besonders effektiv magnetisieren. Hierdurch führt eine Ausrichtung zu übergeordneten Strukturen zu einer besonders effektiven Viskositätserhöhung, wodurch ein Ausfließen des Dichtmittels aus der Einstichstelle besonders gut vermieden wird.

Gemäß einer weiteren vorteilhaften Ausführungsform sind die magnetisierbaren Partikel sphärisch. Hierdurch weist das Dichtmittel vor und nach der Aktivierung ein jeweils optimales Fließverhalten auf. Mit sphärischen Partikeln wird insbesondere die Bildung von Ketten bei Aktivierung begünstigt.

Gemäß einer vorteilhaften Ausführungsform der Erfindung weisen die Partikel zumindest einen inneren Teil (Kern) und einen äußeren Teil (Schale) auf, und sind somit Kern-Schale-Partikel. Hierdurch können Partikel mit verschiedenen Eigenschaftsprofilen eingesetzt werden.

Gemäß einer bevorzugten Ausführungsform der Erfindung ist dabei zumindest die Schale der Partikel magnetisierbar. Hierdurch kann die Magnetisierung besonders schnell und effektiv erfolgen, da das Magnetfeld nicht erst zum Kern der Partikel durchdringen muss.

Gemäß einer weiteren bevorzugten Ausführungsform der Erfindung ist zumindest der Kern der Kern-Schale-Partikel magnetisierbar und die Schale gemäß einer bevorzugten Ausführungsform aus einem nicht magnetisierbaren Material.
Hierdurch wird das magnetisierbare Material, wie beispielsweise Eisen, im Kern durch die äußere Schale, welche beispielsweise ein organisches Polymer umfassen kann, vor chemischen Reaktionen mit den übrigen Bestandteilen des Dichtmittels geschützt, wie insbesondere vor Reaktionen mit peroxidischen Vernetzungssystemen.

Es ist auch denkbar, dass sowohl Kern als auch Schale jeweils wenigstens ein magnetisierbares Material umfassen.

Gemäß einer weiteren bevorzugten Ausführungsform der Erfindung sind die Partikel durchgängig aus wenigstens einem magnetisierbaren Material.

Die Schale und/oder der Kern bzw. die magnetisierbaren Partikel umfassen somit wenigstens ein magnetisierbares Material. Hierbei kann es sich prinzipiell um sämtliche denkbaren magnetisierbaren Materialien handeln, wie ferromagnetische Metalle, wie beispielsweise Eisen, Nickel, Cobalt, Strontium, Barium und Gadolinium, und/oder deren Verbindungen, wie insbesondere Eisenverbindungen, insbesondere Eisenoxide, wie beispielsweise Magnetit (Fe₃O₄) oder Ferrite.
Ferner sind paramagnetische Materialien denkbar, wie Aluminium, Kupfer, Zink und Mangan.
Beispielsweise ist auch ein Gemisch der verschiedenen genannten Materialien denkbar, wie beispielsweise ein Gemisch aus Eisen mit einem paramagnetischen Material. Erfindungswesentlich ist, dass die Partikel in dem Dichtmittel magnetisierbar sind und nicht dauerhaft magnetisch.

Gemäß einer bevorzugten Ausführungsform der Erfindung handelt es sich bei dem magnetisierbaren Material um Eisen, insbesondere und beispielsweise Carbonyleisen, welches durch thermische Zersetzung von Eisenpentacarbonyl (Fe(CO)s) erhalten wird. Carbonyleisen ist insbesondere in Form sphärischer Partikel von der Firma BASF SE (CIP, "carbonyl iron powder") kommerziell erhältlich.
Carbonyleisen ist insbesondere in Form sphärischer Partikel in der Lage entlang des Magnetfeldes Ketten zu bilden, wodurch sich wie beschrieben das Fließverhalten (magnetorheologisches Verhalten) des Dichtmittels verändert.

Gemäß einer weiteren bevorzugten Ausführungsform der Erfindung umfassen die magnetisierbaren Partikel einen magnetisierbaren Kern, wie beispielsweise Fe₃O₄,und eine Schale aus Kieselsäure ("silica") oder einem organischen Polymer, wie insbesondere Polystyrol und/oder Polymethacrylsäure und/oder Polymethacrylate und/oder Copolymere von Polystyrol und Polymethacrylsäure, wobei Polystyrol gemäß einer vorteilhaften Ausführungsform der Erfindung bevorzugt ist.
Gemäß einer weiteren Ausführungsform der Erfindung umfasst die Schale wenigstens eine Kieselsäure. Hierdurch sind die Partikel nach außen weiteren Modifizierungen zugänglich, wie beispielsweise über Organosilane, insbesondere Silan-Kupplungsagenzien, wie eine Anbindung der Kieselsäure-Schale an weitere Substanzen, wie Polymere, ermöglichen.

Gemäß einer weiteren bevorzugten Ausführungsform der Erfindung umfassen die magnetisierbaren Partikel einen Kern aus einem organischen Polymer, wie insbesondere Polystyrol und/oder Polymethacrylsäure und/oder Polymethacrylate und/oder Copolymere von Polystyrol und Polymethacrylsäure, und eine Schale aus einem magnetisierbaren Material, wie beispielsweise Eisen oder andere magnetisierbare Materialen, insbesondere oben genannte magnetisierbare Materialen.

Bevorzugt weisen die Partikel eine Partikelgröße von 0,01 bis 40 µm (Mikrometer), besonders bevorzugt 0,1 bis 40 µm, ganz besonders bevorzugt 0,2 bis 10 µm auf.
Die Partikelgröße der magnetisierbaren Partikel wird mittels SEM ("scanning electron microscopy") bestimmt.

Hierbei ist unter Partikelgröße der größtmögliche Abstand in der zweidimensionalen Projektion eines Partikels zu verstehen. Für den Fall, dass die Partikel sphärisch geformt sind, entspricht dies dem Durchmesser.

Bevorzugt enthält das Dichtmittel 0,2 bis 10 Gew.-% der magnetisierbaren Partikel.

Bevorzugt basiert das Dichtmittel auf der Vernetzung eines Kautschuks und/oder Polyolefins basiert.

Bei dem Kautschuk kann es sich um alle dem Fachmann bekannten Kautschuktypen handeln. Es ist auch ein Gemisch verschiedener Kautschuke denkbar.
Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).
Diese Kautschuktypen sind für die Verarbeitungstemperaturen bei der Herstellung des Dichtmittels und später bei der Anwendung, insbesondere im Fahrzeugluftreifen, besonders gut geeignet.
Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.
Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.
Dieses stellt die Klebrigkeit des fertigen Dichtmittels ein und bestimmt die Fließfähigkeit im Produktionsprozess sowie die lokale Ortsfestigkeit des fertigen Dichtmittels.
Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol® Polybutene der Firma INEOS Capital Limited erhältlich.
Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vemetzungsinitiators Begleitsubstanzen wie Dibutylmaleat nicht eingerechnet sind.

Das Dichtmittel kann ferner weitere Bestandteile enthalten, wie insbesondere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

Gemäß vorteilhafter Ausführungsformen der Erfindung enthält das Dichtmittel folgende Bestandteile in folgenden Mengen:
- 0,2 bis 10 Gew.-% der magnetisierbaren Partikel
- 50 bis 75 Gew.-% wenigstes eines Polyolefins, bevorzugt wenigstens eines Polybutens, und
- 2,0 bis 3,5 Gew.-% wenigstens eines Klebrigmachers und
- 9,0 bis 15 Gew.-% wenigstens eines Kautschuks und
- 5,0 bis 9 Gew.-% wenigstens eines Füllstoffs und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Das Dichtmittel kann durch im Stand der Technik bekannte Verfahren hergestellt werden, wobei die magnetisierbaren Partikel in einer möglichen Vorstufe des Dichtmittels eingemischt werden.
Die magnetisierbaren Partikel können bei der Herstellung des Dichtmittels beispielsweise wie andere Füllstoffe eingemischt werden. Es ist auch denkbar, dass die magnetisierbaren Partikel vor dem Aufbringen des Dichtmittels auf den jeweiligen technischen Gummiartikel, wie insbesondere auf die Reifeninnenseite eines Fahrzeugluftreifens, oder nachträglich gleichmäßig auf das Dichtmittel, insbesondere auf eine aufgebrachte Dichtmittellage, aufgebracht werden.
Das Aufbringen der magnetisierbaren Partikel kann beispielsweise mittels geeigneter Sprühvorrichtungen, wie insbesondere einer Sprühpistole, erfolgen.

Der technische Gummiartikel ist beispielsweise ein Fahrzeugluftreifen.
Als magnetisierbare Partikel wird beispielsweise Carbonyleisen der Firma BASF SE verwendet.
Die Viskosität des Dichtmittels des erfindungsgemäßen Sicherheitssystems beträgt (vor der magnetischen Aktivierung) beispielsweise 2000 Pa*s und nach der Aktivierung durch ein Magnetfeld lokal in der Einstichstelle beispielsweise 4000 bis 6000 Pa*s.
Nach Eintreten des Pannenfalls fließt zunächst Dichtmittel mit einer Viskosität von beispielsweise 2000 Pa*s in die Einstichstelle.
Das Magnetfeld wird beispielsweise dadurch erzeugt, dass ein Elektromagnet aktiviert wird, sobald durch einen Reifendrucksensor ein Druckabfall detektiert und angezeigt wird. Durch Erzeugung des Magnetfeldes werden die Partikel magnetisiert.
Hierdurch werden sie und damit die Einstichstelle detektiert und gleichzeitig erhöht sich die Viskosität des Dichtmittels durch das magnetorheologische Verhalten innerhalb des Magnetfeldes des Magneten, und damit auch in der Einstichstelle. Nach einem (zufälligen) Entfernen des Einstichobjektes, wie einem Nagel, verbleibt das Dichtmittel vergleichsweise ortsfest in der Einstichstelle und ein dauerhaftes Ausfließen von Dichtmittel aus dem Reifen tritt nicht auf.

## Patentansprüche

1. Verfahren zur Detektion und zum Abdichten einer Einstichstelle in einem technischen Gummiartikel, insbesondere in einem Fahrzeugluftreifen, wobei der technische Gummiartikel wenigstens ein Dichtmittel aufweist, welches magnetisierbare Partikel enthält, und wobei das Verfahren wenigstens folgende Verfahrensschritte umfasst:
a) Fließen zumindest eines Teils des Dichtmittels zu der und in die Einstichstelle
b) Erzeugung eines Magnetfeldes und Detektion des Dichtmittels in der Einstichstelle mittels wenigstens eines Magneten und
c) Magnetisierung der Partikel durch das Magnetfeld des wenigstens einen Magneten, sodass das Dichtmittel zumindest in der Einstichstelle durch die magnetischen Anziehungskräfte der Partikel eine erhöhte Viskosität aufweist und somit geeignet ist, ein Ausfließen des Dichtmittels aus der Einstichstelle zu vermeiden.

2. Verfahren nach Anspruch 1, **dadurch gekennzeichnet, dass** die Partikel sphärisch sind.

3. Verfahren nach einem der vorherigen Ansprüche, **dadurch gekennzeichnet, dass** die Partikel als magnetisierbares Material Eisen, insbesondere Carbonyleisen, und/oder eine Eisenverbindung umfassen.

4. Verfahren nach einem der vorherigen Ansprüche, **dadurch gekennzeichnet, dass** die Partikel zumindest einen inneren Teil (Kern) und einen äußeren Teil (Schale) aufweisen, wobei zumindest die Schale der Kern-Schale-Partikel magnetisierbar ist.

5. Verfahren nach einem der vorherigen Ansprüche, **dadurch gekennzeichnet, dass** die Partikel zumindest einen inneren Teil (Kern) und einen äußeren Teil (Schale) aufweisen, wobei zumindest der Kern der Kern-Schale-Partikel magnetisierbar ist.

6. Verfahren nach einem der vorherigen Ansprüche, **dadurch gekennzeichnet, dass** die Partikel einen Partikelgröße von 0,01 bis 40 µm (Mikrometer), besonders bevorzugt 0,1 bis 40 µm, ganz besonders bevorzugt 0,2 bis 10 µm aufweisen.

7. Verfahren nach einem der vorherigen Ansprüche, **dadurch gekennzeichnet, dass** das Dichtmittel 0,2 bis 10 Gew.-% der magnetisierbaren Partikel enthält.

8. Sicherheitssystem zur Durchführung des Verfahrens nach einem der Ansprüche 1 bis 7, umfassend wenigstens ein Dichtmittel, welches magnetisierbare Partikel enthält.

9. Sicherheitssystem nach Anspruch 8, **dadurch gekennzeichnet, dass** das es zudem einen Magneten aufweist, der räumlich von dem Dichtmittel getrennt ist.

10. Fahrzeugluftreifen umfassend das Sicherheitssystem gemäß Anspruch 9.
